# EUROPEAN PATENT APPLICATION

(11) **EP 2 559 345 A2**
(43) Date of publication of application: **20.02.2013**
(21) Application number: 11769104.8
(22) Date of filing: 14.04.2011
(51) Int. Cl.: A23L 1/212, A01G 13/04

(54) **METHOD FOR PREPARING RIPE PERSIMMON DIRECTLY ON A PERSIMMON TREE**

(30) Priority: 15.04.2010 KR 20100034552
(71) Applicant: Baek, Jin Heum, Gyeongnam 621-919 (KR)
(72) Inventor: Baek, Jin Heum, Gyeongnam 621-919 (KR)
(74) Representative: Gille Hrabal
(86) International application number: PCT/KR2011/002677
(87) International publication number: WO 2011/129638

(57) **Abstract**

Disclosed is method for preparing ripe persimmon directly on a persimmon tree, comprising the steps of preparing a sealing cover (S1); providing an ethylene generator for generating ethylene gas in the sealing cover (S2); receiving each persimmon, which is dangled on the tree, with the sealing cover in which the ethylene generator is provided (S3); aging the persimmons for a desired period of time in the sealing cover and thus forming the ripe persimmon (S4); and removing the sealing cover and then cleaning the ripe persimmons (S5). Therefore, the ripe persimmons having a good taste and freshness can be simply and efficiently manufactured.

## Description

### [Technical Field]

The present invention relates to method for preparing ripe persimmon, and particularly to method for preparing ripe persimmon directly on a persimmon tree, which can manufacture the ripe persimmon by using an artificial method.

### [Background Art]

Generally, a ripe persimmon is also called a soft persimmon that an astringent taste is removed by a natural or artificial way and that has a red color and is in a soft and ripe state.

The ripe persimmon has outstanding effectiveness in relieving of hangovers, digestive functions and constipation, and thus the demands thereof is increasing.

A conventional manufacturing method of the ripe persimmon can be classified into a natural method which naturally removes the astringent taste so as to be soft and sweet and an artificial method which artificially removes the astringent taste.

In the natural method which naturally manufactures the ripe persimmon in the state that persimmon is dangled on the tree, the ripe persimmon can be manufactured by that the persimmon is eaten by an insect and thus supplying of nutriment is stopped, by shock of strong wind, or by temperature of the late autumn.

However, the natural method has a problem in that salability thereof is relatively deteriorated.

Further, it is difficult to precisely control the timing of a harvest and also to secure a minimum yield for sale.

Meanwhile, the artificial method includes a step of picking and cleaning persimmons; a step of storing the cleaned persimmons at a certain storage; a step of putting an ethylene generator in the certain storage; and a step of aging the persimmons in a short period of time using ethylene gas generated from the ethylene generator.

The ethylene generator may be prepared by mixing ethephon and a liquefied alkaline substance such as sodium hydroxide in a desired weight ratio and then absorbing the mixture with a solid supporter formed of cotton.

However, the artificial method has a problem in that the ripe persimmon is manufactured in the state that the persimmon is picked from the tree, thereby deteriorating the taste and freshness thereof.

That is, in the artificial method, since the ripe persimmon is manufacture through a post-aging process in the state that the supplying of nutriment is completely stopped, the taste and freshness thereof are deteriorated relatively.

Further, it is difficult to manufacture the uniform quality of ripe persimmons due to a difference in the aged state of each picked persimmon.

It is complex to prepare the ethylene generator and also it involves a high cost. And also there is a problem in securing reliability of consumers due to using of the artificial ethylene generator.

Meanwhile, since many persimmons are collected and cleaned at once, the cleaning efficiency is lowered, and also they are frequently bumped against one another and thus damaged.

### [Disclosure]

### [Technical Problem]

An object of the present invention is to provide method for preparing ripe persimmon directly on a persimmon tree, by which high quality of ripe persimmons can be simply and efficiently manufactured in the state that persimmons are dangled on the tree.

### [Technical Solution]

To achieve the object of the present invention, the present invention provides method for preparing ripe persimmon directly on a persimmon tree, comprising the steps of preparing a sealing cover (S1); providing an ethylene generator for generating ethylene gas in the sealing cover (S2); receiving each persimmon, which is dangled on the tree, with the sealing cover in which the ethylene generator is provided (S3); aging the persimmons for a desired period of time in the sealing cover and thus forming the ripe persimmon (S4); and removing the sealing cover and then cleaning the ripe persimmons (S5).

Preferably, the sealing cover is formed of a transparent material.

Preferably, a fruit is used as the ethylene generator.

Preferably, the ripe persimmons are cleaned with a cleaner for fruit wash.

Preferably, the ripe persimmons are individually cleaned by using an injection nozzle.

### [Advantageous Effects]

According to the present invention as described above, since the ripe persimmon is manufactured in the state that the nutriment is continuously supplied, it is possible to enhance the taste and freshness thereof compared to the ripe persimmon manufactured in the state that the persimmon is picked.

And since it is possible to harvest the ripe persimmon together with leaves, the freshness thereof can be emphasized upon the production and sale of the day.

Further, since it is possible to visually check the state of the ripe persimmon through the sealing cover formed of a transparent material, the uniform quality of ripe persimmon can be shipped out.

And since the natural ethylene generator such as fruit is used, it is possible to secure the reliability of consumers, and particularly, the manufacturing cost can be reduced by using damaged fruit.

Meanwhile, since each ripe persimmon dangled on the tree can be individually cleaned by using a cleaner for fruit wash, it is possible to enhance the cleaning efficiency and also to prevent the damage of ripe persimmon.

### [Description of Drawings]

The above and other objects, features and advantages of the present invention will become apparent from the following description of preferred embodiments given in conjunction with the accompanying drawings, in which:

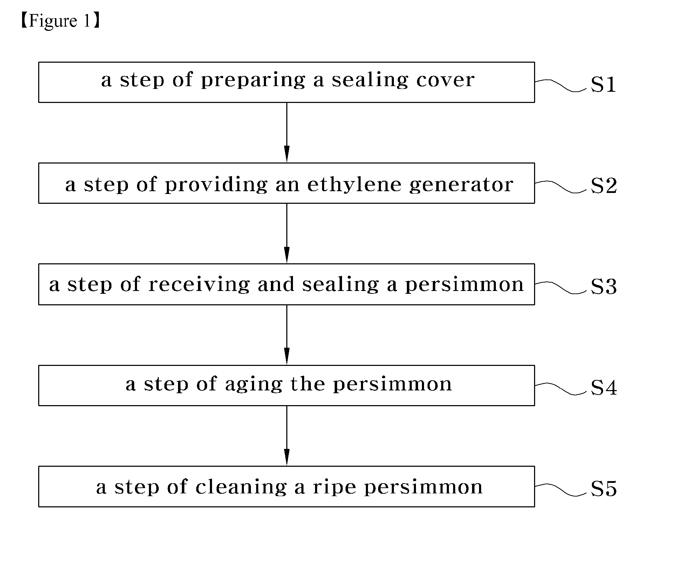

Fig. 1 is a flow chart showing method for preparing ripe persimmon directly on a persimmon tree according to the present invention.

### [Best Mode]

Hereinafter, the embodiments of the present invention will be described in detail with reference to accompanying drawings.

As shown in Fig. 1, method for preparing ripe persimmon directly on a persimmon tree according to the present invention totally includes five steps, as follows.

### ① First step S1 of: preparing a sealing cover

A sealing cover has a desired size which can cover one or more persimmons dangled on the persimmon tree.

Herein, in case that the persimmon tree is small, the sealing cover may cover the whole tree.

If necessary, a size and shape of the sealing cover may be changed properly. Preferably, the sealing cover is formed of a transparent material so that a worker can visually check the state of the ripe persimmon.

Thus, the worker can easily determine the shipping date. As a result, the uniform quality of ripe persimmons can be shopped on proper time.

Preferably, the sealing cover is formed of vinyl having excellent physical properties such as light weight and durability.

### ② Second step S2 of: providing an ethylene generator for generating ethylene gas in a sealing cover.

A fruit, particularly an apple which generates a relatively large quantity of ethylene gas is used as an ethylene generator. In case that a fruit is used as the ethylene gas generator, a pit(or pits) may be created on the surface of the fruit to promote generation of ethylene gas, and then the fruit is sealed by a sealing cover with the persimmon to be ripen.

Since the fruit for generating the natural ethylene gas is used as the ethylene generator, it is possible to completely dispel consumers' worries about the toxic properties of ethylene gas, and since the fruits which are of un-merchantable quality are used as the ethylene generator, a manufacturing cost can be reduced relatively.

Preferably, the ethylene generator is disposed to be spaced apart from the persimmons and thus not directly contacted with the persimmons.

### ③ Third step S3 of: air-tightly receiving each persimmon, which is dangled on the tree, with the sealing cover in which the ethylene generator is provided.

One end of the sealing cover is opened in order to receive a branch of the persimmon tree, on which one or more persimmons are dangled.

The opened end of the sealing cover is air-tightly sealed by a sealing means such as a band.

Meanwhile, if necessary, the band may be integrally formed with the opened end of the sealing cover.

### ④ Fourth step S4 of: aging the persimmons for a desired period of time in the sealing cover and thus forming the ripe persimmon.

Typically, a post aging period of the persimmon is 2∼3 days or 4∼5 days.

Meanwhile, according to the present invention, since the persimmons dangled on the tree can be changed into the ripe persimmons and thus the persimmons can sufficiently receive nutriment from the tree during the post aging period, a taste and freshness thereof can be kept at the same level as the natural ripe persimmons.

### ⑤ Fifth step S5 of: removing the sealing cover and then cleaning the ripe persimmons. Herein, since the worker directly checks the ripe persimmons with the naked eyes and selects and ships only the ripe persimmons of merchantable quality, it is possible to supply the uniform and high quality of ripe persimmons.

The ripe persimmons are washed with a cleaner for fruit wash. The cleaner for fruit wash can be properly selected from various well-known products.

And the ripe persimmons are individually cleaned by using an injection nozzle.

By using the above-mentioned cleaning way, it is possible to enhance the cleaning efficiency and also prevent damage of the ripe persimmons.

### [Industrial Applicability]

According to the present invention as described above, since the ripe persimmon is manufactured in the state that the nutriment is continuously supplied, it is possible to enhance the taste and freshness thereof compared to the ripe persimmon manufactured in the state that the persimmon is picked.

And since it is possible to harvest the ripe persimmon together with leaves, the freshness thereof can be emphasized upon the production and sale of the day.

Further, since it is possible to visually check the state of the ripe persimmon through the sealing cover formed of a transparent material, the uniform quality of ripe persimmon can be shipped out.

And since the natural ethylene generator such as fruit is used, it is possible to secure the reliability of consumers, and particularly, the manufacturing cost can be reduced by using damaged fruit.

Meanwhile, since each ripe persimmon dangled on the tree can be individually cleaned by using a cleaner for fruit wash, it is possible to enhance the cleaning efficiency and also to prevent the damage of ripe persimmon.

While the present invention has been described with respect to the specific embodiments, it will be apparent to those skilled in the art that various changes and modifications may be made without departing from the spirit and scope of the invention as defined in the following claims.

## Claims

1. Method for preparing ripe persimmon directly on a persimmon tree, comprising the steps of:
preparing a sealing cover;
providing an ethylene generator for generating ethylene gas in the sealing cover;
receiving each persimmon, which is dangled on the tree, with the sealing cover in which the ethylene generator is provided;
aging the persimmons for a desired period of time in the sealing cover and thus forming the ripe persimmon; and
removing the sealing cover and then cleaning the ripe persimmons.

2. The method for preparing ripe persimmon directly on a persimmon tree according to claim 1, wherein the sealing cover is formed of a transparent material.

3. The method for preparing ripe persimmon directly on a persimmon tree according to claim 1 or 2, wherein a fruit is used as the ethylene generator.

4. The method for preparing ripe persimmon directly on a persimmon tree according to claim 3, wherein the ripe persimmons are cleaned with a cleaner for fruit wash.

5. The method for preparing ripe persimmon directly on a persimmon tree according to claim 1, wherein the ripe persimmons are individually cleaned by using an injection nozzle.
